# EUROPEAN PATENT SPECIFICATION

(11) **EP 0 917 144 B1**
(45) Date of publication and mention of the grant of the patent: **07.05.2003**
(21) Application number: 98121157.6
(22) Date of filing: 11.11.1998
(51) Int. Cl.: G11B 20/10

(54) **Method and apparatus for controlling a data buffer**
Verfahren und Gerät zur Steuerung eines Daten-Zwischenspeichers
Procédé et dispositif de commande d'une mémoire intermédiaire de données

(30) Priority: 11.11.1997 EP 97119673
(43) Date of publication of application: 19.05.1999
(73) Proprietor: DEUTSCHE THOMSON-BRANDT GMBH, 78048 Villingen-Schwenningen (DE)
(72) Inventor: Ostermann, Ralf, 30451 Hannover (DE)
(74) Representative: Hartnack, Wolfgang, Dipl.-Ing.

(56) References cited:
- EP-A- 0 695 094
- EP-A- 0 713 341
- EP-A- 0 733 984
- EP-A- 0 798 719
- EP-A- 0 798 722
- WO-A-96/19779
- WO-A-97/13364
- WO-A-97/13367

## Description

The invention relates to a method and an apparatus for controlling a data buffer, for example the track buffer in a DVD player.

### Prior Art

During the reproduction of optical discs, the pick-up generates a data stream at a specific, first instantaneous data rate. Further processing of the useful information stored is effected at a second instantaneous data rate, which does not have to correspond to the first data rate.
In order to compensate for the resultant difference, a track buffer is inserted into the data stream coming from the pick-up.
EP-A-0 798 722 describes a data reproducing device containing a data buffer to which an input data stream is written and from which several output data streams derived from the input data stream are read, wherein each one of the output data streams is processed further in a specific data decoder. The data for the data decoders have a combination or order that differs from that in the input data stream.

### Invention

As explained above, the track buffer has to compensate for different instantaneous or short-term data rates. A further requirement is to allocate the corresponding data from the data stream to the respectively associated decoder or to demultiplex the data stream. The input data packets may, for example, have a different length or data arrangement from the data packets, which can be processed by the decoder. The decoder or decoders require a dedicated bit buffer. Contemporary device architectures demand a decoder bit buffer comprising a single coherent memory area. In order to satisfy this requirement, the data firstly have to be stored in the track buffer, for the purpose of data rate compensation, and then - possibly within the same physical memory - have to be recopied once again and reallocated in order subsequently to be available as bit buffer for the respective decoder. However, each copying operation reduces the overall available performance of the components involved. On the one hand, the CPU (central processing unit) which manages the copying operation is burdened. On the other hand, the copying operation reduces the remaining memory bandwidth.

The invention is based on the object of specifying a method for improved controlling of a track buffer. This object is achieved by means of the method specified in Claim 1.

The invention is based on the further object of specifying an apparatus for application of the method according to the invention. This object is achieved by means of the apparatus specified in Claim 5.

If, in a DVD player (digital versatile disc), for example the video or audio decoder and the CPU (central processing unit) controlling the track buffer are provided with an identical address space, that is to say the decoder bit buffer or buffers is or are mapped into the CPU address space, the resulting solution is not, therefore, particularly efficient. However, it is now possible to avoid recopying of the data in the track buffer if the data which are initially written to the track buffer are processed directly by the decoder or the decoders by means of a chained list. This chained list is generated by a software demultiplexer. In addition, the decoders are modified.
Instead of a data decoder, it is also possible to use an output interface, in the case of which the data likewise have to be present in a specific order and at a specific instant.

In principle, the method according to the invention consists in the following: an input data stream is written to a data buffer and is controlled in such a way that at least one output data stream derived from the input data stream is read out and is processed further in a data decoder associated with the respective output data stream, the data for a data decoder having to be available in the output data stream in a combination and/or order that possibly differs from the input data stream, and in which case the data associated with the respective output data stream are provided by means of a chained list, which is generated by a corresponding demultiplexer, from the input data stream for the data decoder or data decoders, the said input data stream being written to the data buffer. The different order and/or combination of the data may be necessary for displaying trick modes, for example.

Advantageous developments of the method according to the invention emerge on the associated dependent claims.

In principle, the invention relates to an apparatus having a data buffer, to which an input data stream is written by means of an input DMA controller and from which at least one output data stream derived from the input data stream is read and is processed further in a data decoder associated with the respective output data stream, the data for a data decoder having to be available in the output data stream in a combination and/or order that possibly differs from the input data stream, and in which case the data associated with the respective output data stream are provided by means of a chained list, which is generated by a corresponding demultiplexer, from the input data stream for the data decoder or data decoders, the said input data stream being written to the data buffer.

Advantageous developments of the apparatus according to the invention emerge from the associated dependent claims.

### Drawings

Exemplary embodiments of the invention are described with reference to the drawings, in which:
- Fig. 1: shows a simplified block diagram of a DVD player;
- Fig. 2: shows improved controlling of the track buffer from Figure 1;
- Fig. 3: shows the application of a chained list.

### Exemplary embodiments

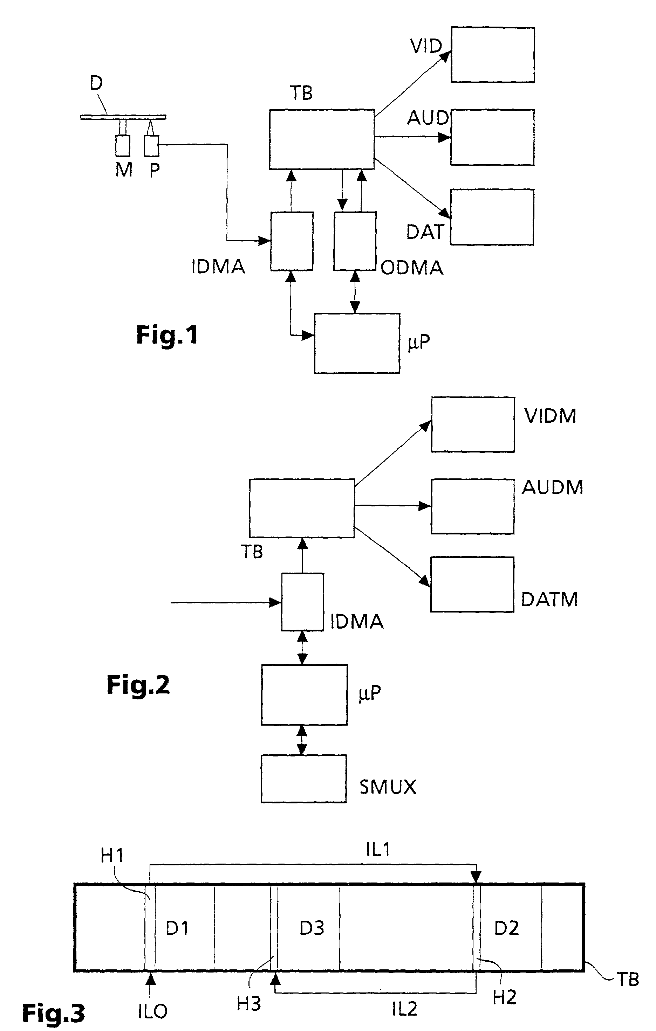

Figure 1 shows an optical disk D, which is driven by a motor M and from which data are read by means of a pick-up P.
These data are fed in conditioned form, for example after amplification and error correction, to the track buffer TB via an input DMA controller (direct memory access) IDMA.
They are buffer-stored in the said track buffer in order, as described above, to compensate for different instantaneous or short-term data rates. The corresponding partial data streams of the buffer-stored data stream are recopied from the track buffer in each case into an associated decoder bit buffer. In this case, a video, audio, subpicture, and/or data decoder DAT may be involved, for example. The video decoder VID may be an MPEG video decoder. The audio decoder AUD may be an MPEG or AC3 audio decoder. Instead of a data decoder, it is also possible to use an output interface. However, such decoders require a dedicated bit buffer in order to access specific data in a specific order at specific instants. Therefore, the data for a data decoder must be available in the output data stream in a combination and/or order that possibly differs from the input data stream.
Since, as already mentioned above, contemporary device architectures demand a decoder bit buffer comprising a single coherent memory area, the data initially stored in the track buffer are recopied into the bit buffer for the respective decoder by means of an output DMA controller ODMA in the required order and at the required instant. The input DMA controller IDMA and the output DMA controller ODMA are controlled by a common processor µP or by two separate processors.
It is possible to avoid the recopying of data from the track buffer TB into the decoder bit buffers if the data initially written to the track buffer are processed directly by the decoder or the decoders VID, AUD, DAT by means of an trained list and the track buffer TB and also the decoder bit buffers are mapped into the same physical memory.
Figure 2 shows a corresponding block diagram, in which, in comparison with Figure 1, the output DMA controller ODMA is not required because the recopying of data from TB into the decoder bit buffers is obviated. TB, IDMA, VIDM, AUDM and DATM correspond, in principle, to Figure 1, although TB may have a smaller memory bandwidth.

The chained list according to Figure 3 is generated by a software demultiplexer SMUX, which may be thought of as being associated with the processor µP. The track buffer TB has a size of 200 kbytes, for example. The data in the data stream coming from the pick-up P can, for example, be organised into data sectors having a length of 2048 bytes and are written to an area of TB that is still free by IDMA. Such a free area of TB is free, for example, by virtue of the fact that data from this area have previously been decoded in one of the decoders. After the data portions D1, D2, D3 or data sectors, which are preferably relatively small in comparison with the size of TB, have been loaded into the buffer TB, SMUX generates respective management data H1, H2, H3 for the associated data portion whilst taking account of header information contained in D1, D2, D3. These management data represent a chained list and specify the decoder to which the respective data portion belongs and, possibly, the order in which and the instant at which the data from the respective data portion are fed to the decoder. IL0 represents the start of the chained list with the first management data packet H1, to which data portion D1 belongs. An address IL1 is preferably specified at the beginning of such a management data packet H1, which address refers to the beginning of the next management data packet H2 and thus to the next part of the chained list. The same applies correspondingly to the data portions D2 and D3, address IL2 and management data packet H3.
The end of a chained list may be specified by an end identifier instead of such an address or by the absence of such an address.
After a data portion has been forwarded from TB to the corresponding decoder, the next data portion is evaluated by means of the continuation of the chained list. In addition, in comparison with Figure 1, the decoders VIDM, AUDM and DATM are modified in such a way that they can reach the beginning of the next associated data portion by means of the addresses IL0, IL1, IL2, ... and can detect the end identifier or the absent address and thus the end of a chained list. The length of a chained lists depends, for example, on the kind of coded picture type and on the respectively associated number of data sectors in the multiplex data stream coming from IP. For example, intraframe-coded pictures may require significantly longer chained lists than interframecoded pictures.

The invention permits the use of relatively inexpensive buffers which only have to have a relatively low memory bandwidth. The invention additionally permits the use of a relatively low-power processor assigned to the buffer. Advantageously, the capacity of the track buffer can be adapted dynamically to the respective proportions of data sector types in the data stream of IP and to the present requirements of the decoders. A rigid functional allocation to defined sub-areas of the track buffer is unnecessary.

The invention can be used in reproduction devices for all kinds of storage media, in particular for optical or magnetic storage media such as, for example, optical discs and magnetic tapes, but also in the transmission of data to be decoded when the instantaneous or short-term transmission data rate is not equal to the instantaneous or short-term decoding data rate.
The invention can also be employed when the input data rate is not variable. This is advantageous particularly when a software demultiplexer is used, since the latter cannot process the input data packets on-the-fly but rather the latter must initially be present as complete packets in the buffer.

## Claims

1. Method for controlling a data buffer (TB) storing data to be decoded in data decoders (VIDM, AUDM, DATM), into which data buffer an input data stream is written (IDMA) and from which data buffer output data derived from said input data stream are read and demultiplexed and processed further by said data decoders (VIDM, AUDM, DATM),
wherein corresponding ones of said output data are to be available in each data decoder in a combination and/or order that possibly differs from the combination and/or order of these data in said input data stream, said method being **characterised by**:
- generating management data (H1, H2, H3) in the form of a chained list specifying data portion addresses (IL0, IL1, IL2) for the associated ones of the data portions for said data decoders (VIDM, AUDM, DATM);
- said data decoders accessing the associated ones of said data portions (D1, D2, D3) in said data buffer (TB) by means of said addresses (IL0, IL1, IL2) contained in said chained list and directly processing said data portions.

2. Method according to claim 1, wherein said data decoders are video (VIDM), audio (AUDM), subpicture and/or data (DAT) decoders.

3. Method according to claim 1 or 2, wherein said demultiplexing is realised by means of software.

4. Method according to one of claims 1 to 3, wherein said input data stream originates from a DVD disc.

5. Apparatus including:
- an input DMA controller (IDMA);
- data decoders (VIDM, AUDM, DATM);
- a data buffer (TB) into which an input data stream is written by means of said input DMA controller (IDMA) and from which data buffer output data derived from said input data stream are read and demultiplexed and processed further by said data decoders (VIDM, AUDM, DATM),
wherein corresponding ones of said output data are to be available in each data decoder in a combination and/or order that possibly differs from the combination and/or order of these data in said input data stream,
said apparatus being **characterised by**:
- means (SMUX, µP) for generating management data (H1, H2, H3) in the form of a chained list specifying data portion addresses (IL0, IL1, IL2) for the associated ones of the data portions for said data decoders (VIDM, AUDM, DATM),
wherein said data decoders access the associated ones of said data portions (D1, D2, D3) in said data buffer (TB) by means of said addresses (IL0, IL1, IL2) contained in said chained list and directly process said data portions.

6. Apparatus according to claim 5, wherein said data decoders are video (VIDM), audio (AUDM), subpicture and/or data (DAT) decoders.

7. Apparatus according to claim 5 or 6, wherein said demultiplexing is realised by means of software.

8. Apparatus according to one of claims 5 to 7, wherein said input data stream originates from a DVD disc.

## Patentansprüche

1. Verfahren zur Steuerung eines Daten-Pufferspeichers (TB), der Daten speichert, die in Daten-Dekodierern (VIDM, AUDM, DATM) dekodiert werden sollen, in den ein Eingangs-Datenstrom (IDMA) geschrieben wird, und aus dem von dem Eingangs-Datenstrom abgeleitete Ausgangs-Daten gelesen und demultiplext und von den Daten-Dekodierern (VIDM, AUDM, DATM) weiterverarbeitet werden, wobei entsprechende Ausgangs-Daten in jedem Daten-Dekodierer in einer Kombination und/oder Reihenfolge verfügbar sein sollen, die sich gegebenenfalls von der Kombination und/oder Reihenfolge dieser Daten in dem Ausgangs-Datenstrom unterscheidet, **gekennzeichnet durch:**
- Erzeugen von Managemant-Daten (H1, H2, H3) in Form einer verketteten Liste, die Datenteil-Adressen (ILO, IL1, IL2) für die jeweils zugeordneten Datenteile für die Daten-Dekodierer (VIDM, AUDM, DATM) spezifiziert;
- Wobei die Daten-Dekodierer zu den zugeordneten Datenteilen (D1, D2, D3) in dem Daten-Pufferspeicher (TB) mittels der Adressen (ILO, IL1, IL2) Zugriff nehmen, die in der verketteten Liste enthalten sind und die Datenteile unmittelbar verarbeiten.

2. Verfahren nach Anspruch 1, bei dem die Daten-Dekodierer Video-(VIDM)-, Audio-(AUDM)-, Unterbild- und/oder Daten-(DAT)-Dekodierer sind.

3. Verfahren nach Anspruch 1 oder 2, bei dem das Demultiplexen mittels Software realisiert wird.

4. Verfahren nach einem der Ansprüche 1 bis 3, bei dem der Eingangs-Datenstrom von einer DVD-Platte stammt.

5. Vorrichtung, enthaltend:
- eine Eingangs-DMA-Steuereinheit (IDMA);
- Daten-Dekodierer (VIDM, AUDM, DATM);
- einen Daten-Pufferspeicher (TB), in den mittels der Eingangs-DMA-Steuereinheit (IDMA) ein Eingangs-Datenstrom geschrieben wird, und von dem aus dem Eingangs-Datenstrom abgeleitete Ausgangs-Daten gelesen und demultiplext und von den Daten-Dekodierern (VIDM, AUDM, DATM) weiterverarbeitet werden; wobei entsprechende Ausgangs-Daten in jedem Daten-Dekodierer in einer Kombination und/oder Reihenfolge verfügbar sein sollen, die sich gegebenenfalls von der Kombination und/oder Reihenfolge dieser Daten in dem Eingangs-Datenstrom unterscheidet; **gekennzeichnet durch:.**
- Mittel (SMUX, µP) zum Erzeugen von Management-Daten (H1, H2, H3) in Form einer verketteten Liste, die Datenteil-Adressen (ILO, IL1, IL2) für die zugeordneten Datenteile für die Daten-Dekodierer (VIDM, AUDM, DATM) spezifiziert; wobei die Daten-Dekodierer zu den zugeordneten Datenteilen (D1, D2, D3) in dem Daten-Pufferspeicher (TB) mittels der Adressen (ILO, IL1, IL2) Zugriff nehmen, die in der verketteten Liste enthalten sind, und unmittelbar die Datenteile verarbeiten.

6. Vorrichtung nach Anspruch 5, bei der die Daten-Dekodierer Video-(VIDM), Audio-(AUDM)-, Unterbild- und/oder Daten-(DATM)-Dekodierer sind.

7. Vorrichtung nach Anspruch 5 oder 6, bei der das Demultiplexen mittels Software realisiert wird.

8. Vorrichtung nach einem der Ansprüche 5 bis 7, bei der der Eingangs-Datenstrom von einer DVD-Platte stammt.

## Revendications

1. Procédé de commande d'une mémoire intermédiaire de données (TB) stockant des données à décoder dans des décodeurs de données (VIDM, AUDM, DATM) dans laquelle un flux de données d'entrée est écrit (IDMA) et à partir de laquelle des données de sortie dérivées dudit flux de données d'entrée sont lues et démultiplexées puis traitées par lesdits décodeurs de données (VIDM, AUDM, DATM), dans lequel les données de sortie correspondantes doivent être disponibles dans chaque décodeur de données dans une combinaison et/ou un ordre pouvant différer de la combinaison et/ou de l'ordre de ces données dans ledit flux de données d'entrée, ledit procédé étant
**caractérisé par :**
- la génération de données de gestion (H1, H2, H3) sous la forme d'une liste chaînée spécifiant des adresses de portions de données (IL0, IL1, IL2) pour les portions de données associées pour lesdits décodeurs de données (VIDM, AUDM, DATM),
- l'accès desdits décodeurs de données auxdites portions de données associées (D1, D2, D3) dans ladite mémoire intermédiaire de données (TB) au moyen desdites adresses (IL0, IL1, IL2) contenues dans ladite liste chaînée et le traitement direct desdites portions de données par lesdits décodeurs.

2. Procédé conforme à la revendication 1, dans lequel lesdits décodeurs de données sont des décodeurs vidéo (VIDM), audio (AUDM), de sous-images et/ou de données (DAT).

3. Procédé conforme à la revendication 1 ou 2, dans lequel ledit démultiplexage est réalisé au moyen d'un logiciel.

4. Procédé conforme à l'une des revendications 1 à 3, dans lequel ledit flux de données d'entrée provient d'un disque DVD.

5. Dispositif comportant :
- un contrôleur DMA d'entrée (IDMA) ;
- des décodeurs de données (VIDM, AUDM, DATM) ;
- une mémoire intermédiaire de données (TB) dans laquelle un flux de données d'entrée est écrit au moyen dudit contrôleur DMA d'entrée (IDMA) et à partir de laquelle des données de sortie dérivées dudit flux de données d'entrée sont lues et démultiplexées, puis traitées par lesdits décodeurs de données (VIDM, AUDM, DATM),
dans laquelle les données de sortie correspondantes doivent être disponibles dans chaque décodeur de données dans une combinaison et/ou un ordre pouvant différer de la combinaison et/ou de l'ordre de ces données dans ledit flux de données d'entrée, ledit dispositif étant **caractérisé par** :
- des dispositifs (SMUX, µP) permettant de générer des données de gestion (H1, H2, H3) sous la forme d'une liste chaînée spécifiant des adresses de portions de données (IL0, IL1, IL2) pour lesdites portions de données associées pour lesdits décodeurs de données (VIDM, AUDM, DATM),
dans lesquels lesdits décodeurs de données accèdent auxdites portions de données associées (D1, D2, D3) dans ladite mémoire intermédiaire de données (TB) au moyen desdites adresses (IL0, IL1, IL2) contenues dans ladite liste chaînée et traitent directement lesdites portions de données

6. Dispositif conforme à la revendication 5, dans lequel lesdits décodeurs de données sont des décodeurs vidéo (VIDM), audio (AUDM), de sous-images et/ou de données (DAT).

7. Dispositif conforme à la revendication 5 ou 6, dans lequel ledit démultiplexage est réalisé au moyen d'un logiciel.

8. Dispositif conforme à l'une des revendications 5 à 7, dans lequel ledit flux de données d'entrée provient d'un disque DVD.
